# EUROPEAN PATENT APPLICATION

(11) **EP 2 806 651 A1**
(43) Date of publication of application: **26.11.2014**
(21) Application number: 14167976.1
(22) Date of filing: 12.05.2014
(51) Int. Cl.: H04N 21/41, H04L 12/28, H04N 7/15, H04N 21/431, H04N 21/436, H04N 21/462, H04N 21/4788, H04N 21/258

(54) **Meeting terminal and traffic processing method thereof**

(30) Priority: 21.05.2013 CN 201310190564
(71) Applicant: ZTE Corporation, Guangdong 518057 (CN)
(72) Inventor: Zhang, Yan, 518057 SHENZHEN (CN); Zhang, Tai, 518057 SHENZHEN (CN); Guo, YanLing, 518057 SHENZHEN (CN)
(74) Representative: Gevers Patents

(57) **Abstract**

The disclosure provides a meeting terminal, including: a video input module configured to acquire a video file through a camera; an audio input/output module configured to acquire an audio file, decode and then play an encoded audio signal; a central processing module configured to encode the acquired audio file/ an acquired video file to obtain the encoded audio signal/an encoded video signal, send the encoded audio signal to the audio input/output module, and send the encoded video signal to a projection module; and the projection module, configured to decode and then play the encoded video signal sent by the central processing module. The disclosure further provides a traffic processing method for a meeting terminal. By means of a technical solution of the disclosure, the meeting terminal and the traffic processing method thereof not only can reduce the complexity in implementation greatly, lower cost, and increase portability, but also can meet a user's needs in various occasions, thus improving user experience.

## Description

### TECHNICAL FIELD

The disclosure relates to the technology of multimedia, and in particular to a meeting terminal based on a projection device and wireless communication technology, as well as a traffic processing method thereof.

### BACKGROUND

As a necessary device for an office meeting, a meeting terminal has become increasingly popular, meeting more needs of business people. The meeting terminal generally includes a video output device, a video input device, an audio input/output device, a control unit, and the like; thus the entire terminal is usually huge in size, and very pricy.

### SUMMARY

In view of the above, it is desired that embodiments of the disclosure provide a meeting terminal and a traffic processing method thereof, which can lower cost, increase portability, and meet a user's needs in various occasions.

To this end, a technical solution of the disclosure is implemented as follows.

The disclosure provides a meeting terminal, including:
a video input module configured to acquire a video file through a camera;
an audio input/output module configured to acquire an audio file, decode and then play an encoded audio signal;
a central processing module configured to encode the acquired audio file/an acquired video file to obtain the encoded audio signal/an encoded video signal, send the encoded audio signal to the audio input/output module, and send the encoded video signal to a projection module; and
the projection module, configured to decode and then play the encoded video signal sent by the central processing module.

In an embodiment, the meeting terminal may further include a first wireless communication module configured to be connected with a second meeting terminal other than the meeting terminal to which the first wireless communication module belongs, send synchronously the acquired audio file/video file to the second meeting terminal, or receive an audio file/video file sent by the second meeting terminal.

In an embodiment, the meeting terminal may further include a second wireless communication module configured to be connected with a terminal device, receive a file sent by the terminal device, or sent a file to the terminal device.

In an embodiment, the meeting terminal may further include a control module configured to control, through the central processing module, a volume of an audio output, an image definition of a video output, a focal length of the camera, and a switch of a wireless communication module.

In an embodiment, the meeting terminal may further include a power management module configured to power the meeting terminal.

In an embodiment, the meeting terminal may further include an interface module connected with the projection module, and provided with a high-definition video interface.

In an embodiment, the meeting terminal may further include an indicator configured to indicate a state of the meeting terminal, wherein the state of the meeting terminal includes an operation state, a power state and a signal input/output state.

The disclosure further provides a traffic processing method based on the meeting terminal according to claim 1, including steps of:
acquiring, by the meeting terminal, an audio file/video file; encoding, by the meeting terminal, the audio file/video file to obtain an encoded audio signal/ encoded video signal; decoding and then playing, by the meeting terminal, the encoded audio signal/ encoded video signal.

In an embodiment, the traffic processing method may further include step(s) of
connecting the meeting terminal to a second meeting terminal other than the meeting terminal itself; sending, by the meeting terminal, synchronously the acquired audio file/video file to the second meeting terminal; or receiving, by the meeting terminal, an audio file/video file sent by the second meeting terminal.

In an embodiment, the traffic processing method may further include step(s) of: connecting the meeting terminal to a terminal device; receiving, by the meeting terminal, a file sent by the terminal device; or sending, by the meeting terminal, a file to the terminal device.

A meeting terminal and a traffic processing method thereof provided by the disclosure use a central processing module, a video input module, an audio input/output module and a projection module set in the meeting terminal; the central processing module respectively encodes a video file and an audio file acquired by the video input module and the audio input/output module; then the video file is decoded and then played by the projection module; the audio file is decoded and then played by the audio input/output module; in this way, there is no need of connecting and networking, as in the prior art, multiple discrete devices, such as a projection device, a video input device, an audio input and output device, and a control unit; instead, it is only required to implement audio and/or video collection, encoding, transmission, control, decoding and playing through corresponding functional modules all integrated in one meeting terminal, which not only reduces the complexity in implementation greatly, lowers cost, and increases portability, but also meets a user's needs in various occasions, thus improving user experience.

### BRIEF DESCRIPTION OF THE DRAWINGS

Fig. 1 is a diagram of a structure of a meeting terminal according to the disclosure; and
Fig. 2 is a block diagram of a method for implementing a traffic with a meeting terminal provided by an embodiment of the disclosure.

### DETAILED DESCRIPTION

The disclosure is further elaborated below with reference to the drawings and specific embodiments.

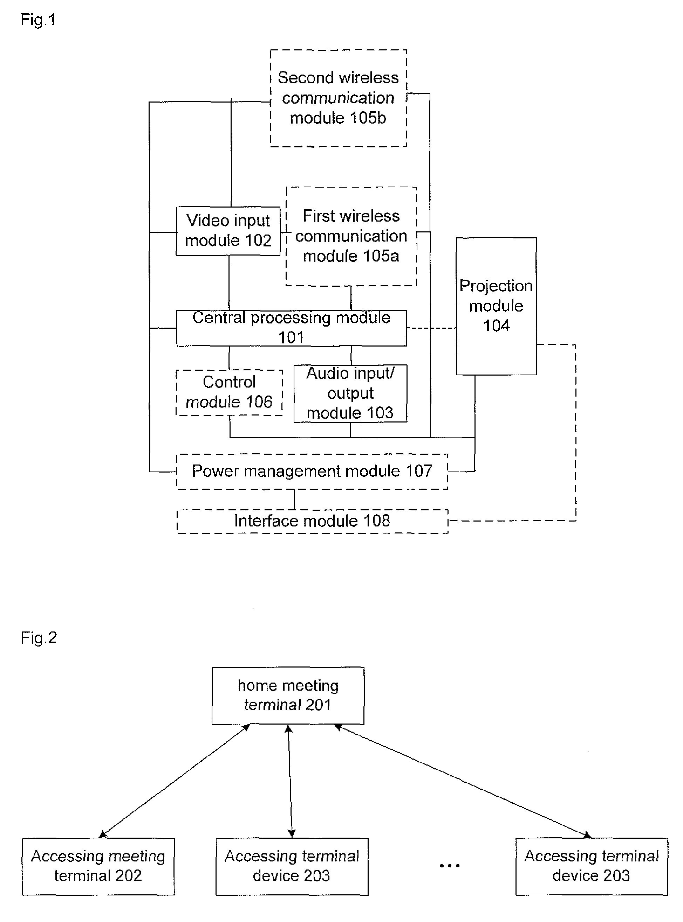

Fig.1 is a diagram of a structure of a meeting terminal according to the disclosure. As shown in Fig.1, the meeting terminal includes: a central processing module 101, a video input module 102, an audio input/output module 103 and a projection module 104; the video input module 102, the audio input/output module 103 and the projection module 104 are connected respectively to the central processing module 101, wherein
the video input module 102 is configured to acquire a video file through a camera, and send the video file to the central processing module 101;
the audio input/output module 103 is configured to acquire an audio file, and send the audio file to the central processing module 101 to perform decoding; and is configured to decode and then play an encoded audio signal sent by the central processing module 101;
the central processing module 101 is configured to encode the acquired audio file/video file to obtain an encoded audio signal/ encoded video signal, send the encoded audio signal to the audio input/output module 103, and send the encoded video signal to the projection module 104; and
the projection module 104 is configured to decode and then play the encoded video signal sent by the central processing module 101.

In an embodiment, the video input module 102 collects, through a camera, a scene of a site where the meeting terminal is located, the collected scene being taken as the video file, which may be processed by the central processing module 101 and then sent to the projection module 104 to play; in order not to increase the total size of the meeting terminal, the camera may be designed as a foldable one or a removable one.

The audio input/output module 103 may collect and play a sound of the site where the meeting terminal is located; and may play an audio file stored in the meeting terminal.

In an embodiment, the meeting terminal further includes a first wireless communication module 105a configured to be connected with another meeting terminal, namely, a second meeting terminal other than the meeting terminal to which the first wireless communication module belongs, send synchronously the acquired audio file/video file to the second meeting terminal, or receive an audio file/video file sent by the second meeting terminal.

In an embodiment, the first wireless communication module 105a is connected, through the control of the central processing module 101, with the other meeting terminal, and receives and plays an audio file/video file sent by the other meeting terminal; the first wireless communication module 105a may also receive, through the control of the central processing module, a connection request sent by another meeting terminal, set a call number of the other meeting terminal; and in accessing other meeting terminals, request for an uplink data link, establish an uploading queue, establish in sequence connections with the other meeting terminals according to the call numbers, and send the audio file/video file of the meeting terminal to the other meeting terminals for synchronous playing.

In an embodiment, the meeting terminal further includes a second wireless communication module 105b configured to be connected with a terminal device, receive a file sent by the terminal device, or send a file to the terminal device, wherein the file includes but is not limited to an audio file, a video file or a text file.

In an embodiment, the second wireless communication module 105b is provided with a built-in Peer-to-Peer (P2P) functional module, such as a Wi-Fi module, which may serve as a wireless hotspot device for network accessing at any time from anywhere, and another terminal devices having a Wi-Fi function may also be supported to be connected and communicate with the meeting terminal.

In an embodiment, the terminal device may be a portable computer/laptop/notebook PC, a tablet computer, an Ultrabook, a smart phone or the like that has a Wi-Fi function.

In an embodiment, the meeting terminal further includes a control module 106 configured to control, through the central processing module 101, a volume of an audio output, an image definition of a video output, a focal length of the camera, and a switch of a wireless communication module.

In an embodiment, the control module 106 may further control switching between audio/video files, connection between the meeting terminal and a second meeting terminal; a function of the control module 106 may be implemented through a touch screen or a key/button set for the meeting terminal.

In an embodiment, the meeting terminal further includes a power management module 107, connected respectively with the central processing module 101, the video input module 102, the audio input/output module 103, the projection module 104, wireless communication module 105 and the control module 106, the power management module 107 being configured to power the meeting terminal.

In an embodiment, the meeting terminal further includes an interface module 108 connected with the projection module 104, the interface module 108 being provided with a high-definition video interface.

In an embodiment, the interface module 108 may be a High Definition Multimedia Interface (HDMI) module, a Video Graphics Array (VGA) interface module, or a Digital Video Interface (DVI) module, and may be connected, via a cable, with a device having a high-definition video source to play the high-definition video source.

In an embodiment, the meeting terminal further includes an indicator configured to indicate a state of the meeting terminal, wherein the state of the meeting terminal includes but is not limited to an operation state, a power state and a signal input/output state.

In an embodiment, the indicator may be a Light Emitting Diode (LED) indicator light, indicating various states of the meeting terminal through colours and twinkles of the indicator light. For example, a red indicator light indicates a shutdown state, a green indicator light indicates an operation state, a yellow indicator light indicates a low battery state of the meeting terminal; an orange indicator light indicates a charging state of the meeting terminal; continuous twinkles of a green indicator light indicates a signal input/output state, and so on.

The disclosure further provides a traffic processing method for a meeting terminal, the method including that: the meeting terminal acquires an audio file/video file, encodes the audio file/video file to obtain an encoded audio signal/ encoded video signal, and decodes and then plays the encoded audio signal/ encoded video signal.

In an embodiment, the method may further include that: the meeting terminal is connected with a second meeting terminal other than the meeting terminal itself, and sends synchronously the acquired audio file/video file to the second meeting terminal, or receives an audio file/video file sent by the second meeting terminal.

In an embodiment, the method may further include that: the meeting terminal is connected with a terminal device, and receives a file sent by the meeting terminal, or sends a file to the terminal device, wherein the file includes but is not limited to an audio file, a video file, or a text file.

The traffic processing method for a meeting terminal provided by the disclosure is further elaborated below with reference to specific embodiments.

### Embodiment 1

For example, a meeting terminal is provided with a built-in Wi-Fi module and a function of a control module is implemented through a touch screen. When the meeting terminal is started, a projection module begins to operate, projecting a background picture; as a control end and a display end, the touch screen displays a current operation state of the device, and provides a usable menu for a user to conduct a next operation; after it is determined that the Wi-Fi module operates normally, when another terminal device is connected to the meeting terminal through Wi-Fi and completes adaptation; the other terminal device may be a portable computer/laptop/notebook PC, a tablet computer, a Ultrabook, a smart phone or the like that has a Wi-Fi function. A video file, an audio file, or a text file (such as a word document, a PPT document) on the other terminal device may be transmitted wirelessly to the meeting terminal, and played through the projection module.

### Embodiment 2

For example, a meeting terminal serves as a home meeting terminal which a second/another meeting terminal or terminal device accesses. Fig.2 is a block diagram of a method for implementing a traffic with a meeting terminal provided by an embodiment of the disclosure. As shown in Fig.2, there are a home meeting terminal 201, an accessing meeting terminal 202 and an accessing terminal device 203; the accessing meeting terminal 202 and the accessing terminal device 203 serve as accessing terminals that access the home meeting terminal 201; in order to minimize a frequency in switching between the accessing terminals to ensure effect a meeting, the number of the accessing terminals may be restricted; for example, it is pre-set in the meeting terminal that N terminals are allowed to access the meeting terminal, wherein N may be equal to 5, i.e., the total number of accessing meeting terminals and accessing terminal devices is no more than 5.

As a control center of an entire meeting system, the home meeting terminal 201 may set a call number of an accessing terminal and the number of accessing terminals, establish an uploading queue when an accessing terminal applies for an uplink data link, and take charge of playing uploaded audio and video; or may manually switch between accessing terminals through a controller; when an accessing terminal cannot support real-time video transmission, the home meeting terminal 201 may receive, decode and then play just an audio file uploaded by the accessing terminal, with a video remaining to be a frozen picture of a played video from a previous accessing terminal, or a background picture in case there is no previous accessing terminal.

An accessing meeting terminal 202 refers to one other than the home meeting terminal; the accessing meeting terminal 202, although having the same function as that of the home meeting terminal 201, is not the meeting terminal which initiated the meeting, and therefore has no function the initiating terminal has in the meeting system, but is only allowed to access, as a video collection/display device, the home meeting terminal to transmit video and audio files in the same way as other accessing terminals, a remote meeting terminal is not allowed to be accessed by any other terminal.

An accessing terminal device 203 refers to another terminal device supporting video and audio and having a wireless communication function, and may include: a smart phone, a tablet computer, a portable computer/laptop/notebook PC or another terminal device having a Wi-Fi function.

In an embodiment, when an accessing meeting terminal 202 accesses the home meeting terminal 201, the accessing meeting terminal 202 sends an access request message to the home meeting terminal 201; after receiving the access request message, the home meeting terminal 201 adds the accessing meeting terminal 202 in a waiting queue; after successful access of the accessing meeting terminal 202, the home meeting terminal 201 notifies the accessing meeting terminal 202, and transmits, through wireless network communication, a picture acquired by the home meeting terminal 201 through a camera to the accessing meeting terminal 202.

The home meeting terminal 201 may send an instruction to require an accessing meeting terminal 202 to upload a video, and display, in sequence, videos uploaded by accessing meeting terminals 202 according to the order in the waiting queue; the home meeting terminal plays an audio and/or a video file of an accessing meeting terminal 202 by encoding and decoding.

What described are merely embodiments of the disclosure, and are not intended to limit the scope of protection of the disclosure. All modifications, equivalent replacements and improvements made within the scope of the disclosure fall within the scope of protection of the disclosure.

## Claims

1. A meeting terminal, comprising:
a video input module configured to acquire a video file through a camera;
an audio input/output module configured to acquire an audio file, decode and then play an encoded audio signal;
a central processing module configured to encode the acquired audio file/an acquired video file to obtain the encoded audio signal/an encoded video signal, send the encoded audio signal to the audio input/output module, and send the encoded video signal to a projection module; and
the projection module, configured to decode and then play the encoded video signal sent by the central processing module.

2. The meeting terminal according to claim 1, further comprising a first wireless communication module configured to be connected with a second meeting terminal other than the meeting terminal to which the first wireless communication module belongs, send synchronously the acquired audio file/video file to the second meeting terminal, or receive an audio file/video file sent by the second meeting terminal.

3. The meeting terminal according to claim 1, further comprising a second wireless communication module configured to be connected with a terminal device, receive a file sent by the terminal device, or sent a file to the terminal device.

4. The meeting terminal according to claim 1, further comprising a control module configured to control, through the central processing module, a volume of an audio output, an image definition of a video output, a focal length of the camera, and a switch of a wireless communication module.

5. The meeting terminal according to claim 1, further comprising a power management module configured to power the meeting terminal.

6. The meeting terminal according to claim 1, further comprising an interface module connected with the projection module, and provided with a high-definition video interface.

7. The meeting terminal according to claim 1, further comprising an indicator configured to indicate a state of the meeting terminal, wherein the state of the meeting terminal comprises an operation state, a power state and a signal input/output state.

8. A traffic processing method based on the meeting terminal according to claim 1, comprising:
acquiring, by the meeting terminal, an audio file/video file; encoding, by the meeting terminal, the audio file/video file to obtain an encoded audio signal/ encoded video signal; decoding and then playing, by the meeting terminal, the encoded audio signal/ encoded video signal.

9. The traffic processing method according to claim 8, further comprising:
connecting the meeting terminal to a second meeting terminal other than the meeting terminal itself; sending, by the meeting terminal, synchronously the acquired audio file/video file to the second meeting terminal; or receiving, by the meeting terminal, an audio file/video file sent by the second meeting terminal.

10. The traffic processing method according to claim 8 or 9, further comprising:
connecting the meeting terminal to a terminal device; receiving, by the meeting terminal, a file sent by the terminal device; or sending, by the meeting terminal, a file to the terminal device.
